# EUROPÄISCHE PATENTSCHRIFT

(11) **EP 1 991 448 B1**
(45) Veröffentlichungstag und Bekanntmachung des Hinweises auf die Patenterteilung: **16.03.2011**
(21) Anmeldenummer: 07723109.0
(22) Anmeldetag: 08.03.2007
(51) Int. Cl.: B60R 21/207

(54) **SICHERHEITSANORDNUNG IN EINEM FAHRZEUGSITZ**
SAFETY ARRANGEMENT IN A VEHICLE SEAT
ARRANGEMENT DE SECURITE DANS UN SIEGE DE VEHICULE

(30) Priorität: 08.03.2006 DE 102006011105
(43) Veröffentlichungstag der Anmeldung: 19.11.2008
(73) Patentinhaber: Autoliv Development AB, 447 83 Vårgårda (SE)
(72) Erfinder: DUFAUT, Dominique, F-77450 Esbly (FR); LE GUEN, Jean, F-76220 Ferrieres En Bray (FR); HAESAERT, Charles, F-76660 Fresnoy Folny (FR); PHILIPS, Marc, F-6000 Beauvais (FR)
(74) Vertreter: Stornebel, Kai
(86) Internationale Anmeldenummer: PCT/EP2007/002014
(87) Internationale Veröffentlichungsnummer: WO 2007/101689

(56) Entgegenhaltungen:
- EP-A1- 1 369 315
- WO-A-00/12350
- DE-A1- 2 913 474
- GB-A- 2 412 092
- US-A1- 2004 155 446

## Beschreibung

Die Erfindung betrifft eine Sicherheitsanordnung in einem Fahrzeugsitz mit einem Sitzrahmen, auf dem ein Sitzpolster angebracht ist, und einer Airbageinheit mit einem Gasgenerator und einem Gassack, die unterhalb des Sitzpolsters an dem Sitzrahmen angeordnet ist.

Die Sicherheit von Fahrzeuginsassen bei Unfällen wird durch eine Vielzahl von Einrichtungen erhöht. So werden im Falle eines Unfalles Gassäcke oder Airbags vor und neben dem Fahrzeuginsassen aufgeblasen. Weiterhin sind Sicherheitsgurte vorgesehen, die den Insassen bei einem Unfall zurückhalten. Gegebenenfalls sind diese Sicherheitsgurte mit Gurtstraffereinrichtungen ausgestattet, um den Rückhalteffekt zu verbessern.

Bei einem Frontalaufprall besteht für einen angeschnallten Fahrzeugnutzer die Gefahr, dass das Becken des Sitznutzers unter dem Beckengurt durchrutscht, sodass die sicherheitstechnisch günstige Position des Sitznutzers verlassen wird. Dadurch besteht die Gefahr, dass die übrigen Sicherheitseinrichtungen nicht wirksam werden, z.B. indem der Fahrzeuginsasse nicht in den Gassack eintaucht, oder dass der Fahrzeuginsasse sich an dem Schultergurt verletzt. Um dieser Gefahr zu begegnen und das so genannten "Submarining" zu verhindern, sind aus dem Stand der Technik mehrere Lösungen bekannt. Eine Lösung besteht in einer sehr harten Ausgestaltung der Sitzfläche bzw. des Sitzpolsters, sodass ein Unterdurchtauchen des Beckens unter dem Beckengurt nicht erfolgen kann. Dies ist aufgrund des mangelnden Komforts, insbesondere auf langen Strecken, nicht akzeptabel.

Aus der GB 2,412,092 A1 ist ein Fahrzeugsitz mit einer Airbageinheit bekannt, bei dem eine Trägerplatte in einem Sitzrahmen montiert ist. Innerhalb der Trägerplatte ist ein gefalteter Airbag in einer Auswölbung gelagert. Der gefaltete Airbag füllt diese Auswölbung aus und bildet zusammen mit der Trägerplatte eine Ebene. Bei einem Unfall wird ein zugeordneter Gasgenerator aktiviert und befüllt den Gassack mit Gas, Dadurch wird ein Sitzpolster angehoben und der "Submarining"-Effekt vermindert oder eliminiert.

Die GAB 2,385,028 beschreibt eine aufblasbare Sicherheitsanordnung mit einer aufblasbaren Einheit aus zumindest einem vorgeformten, plastisch deformierbaren Element, das als Teil eines Randes einer aufblasbaren Kammer ausgebildet ist. Sobald ein Gasgenerator aktiviert wird, wird ein zunächst nach innen gefalteter Vorsprung nach außen gestülpt. Das aufblasbare Element kann aus Kunststoff oder Metall aufgebaut sein. Ein so genanntes Beckenrückhaltekissen bildet eine Erhöhung im Wesentlichen über die gesamte Breite im vorderen Bereich des Sitzkissens aus, um das Risiko eines Nachvornegleitens zu minimieren,

Die US 2004/155446 betrifft eine gattungsgemäße Sicherheitseinrichtung für einen Fahrzeugnutzer bei dem auf einer Basisplatte ein aufblasbarer Gurt aufgelegt ist. Der aufblasbare Gurt ist von einem Sitzpolster abgedeckt. Der aufblasbare Gurt ist von einer gefalteten Metallplatte umgeben, die sich verformt, wenn der Gurt aufgeblasen wird.

Die aufblasbaren Einrichtungen aus dem Stand der Technik müssen entweder aufwendig gefaltet oder vorgeformt werden, was eine Herstellung und Montage relativ komplex und kostenauswendig macht.

Aufgabe der vorliegenden Erfindung ist es, eine Sicherheitseinrichtung in einem Fahrzeugsitz bereitzustellen, die ein Nachvornerutschen des Sitznutzers im Falle eines Unfalles effektiv vermeidet und gleichzeitig einfach zu montieren und herzustellen ist,

Erfindungsgemäß wird die Aufgabe durch eine Sicherheitseinrichtung mit den Merkmalen des Anspruchs 1 gelöst. Vorteilhafte Ausgestaltungen und Weiterbildungen der Erfindung sind in den Unteransprüchen beschrieben,

Die erfindungsgemäße Sicherheitseinrichtung in einem Fahrzeug mit einem Sitzrahmen, auf dem ein Sitzpolster angebracht ist, und einer Airbageinheit mit einem Gasgenerator und einem Gassack, die unterhalb des Sitzpolsters an dem Sitzrahmenangeordnet sind, sieht vor, dass der Crassack im nicht aktivierten Zustand ungefaltet und flach auf dem Sitzrahmen oder einer Auflage aufliegt. Der Gassack, der im vorderen Bereich des Sitzkissens unterhalb einer

Polsterung flach ausgebildet auf dem Sitzrahmen liegt, verhindert im aufgeblasenen Zustand das "Submarining" eines Sitznutzers und reduziert die Verlagerung des Beckens bei einem Unfall. Dadurch kann das Becken bei einem Unfall durch das Sitzgurtsystem wirkungsvoll zurückgehalten werden. Darüber hinaus wird eine geringere Belastung auf das Becken durch den Beckengurt ausgeübt. Ebenso wird die Belastung des Beckens von dem Sitz reduziert, wenn das Becken nach vorne verlagert wird. Die ungefaltete Anordnung des Gassackes hat eine Erleichterung der Montage und ein schnelleres Aufblasen des Gassackes zur Folge, wodurch sich die Reaktionszeiten verringern lassen. Darüber hinaus nimmt der ungefaltete Gassack weniger Raum ein und erhöht der Gestaltungsspielraum bei de Sitzkonstruktion. Eine Weiterbildung der Erfindung sieht vor, dass eine Stützplatte zumindest einen Teil des Gassackes im nicht aktivierten Zustand gegenüber dem Sitzpolster abdeckt, um den Gassack vor Beschädigungen zu schützen, wenn dieser unterhalb des Sitzpolsters montiert ist. Dadurch wird verhindert, dass der Gassack durch die Bewegungen des Sitznutzers auf dem Sitzpolsters beschädigt wird. Die Stützplatte ist ein Teil des Sitzrahmens oder der Auflage und aus einem Kunststoff- oder Blechmaterial ausgebildet sein. Die Stützplatte ist durch eine Feder, insbesondere eine Torsionsfeder, in Richtung auf den Gassack vorgespannt, so dass die Stützplatte wie ein Deckel auf dem flachen Gassack aufliegt.

Eine Weiterbildung der Erfindung sieht vor, dass der Sitzrahmen eine plattenförmige Auflage für den Gassack aufweist, auf der dieser aufliegt. Diese plattenförmige Auflage ist bevorzugt geneigt ausgebildet, in Richtung zur Sitzvorderkante ansteigend geneigt, um ein passives Element zur Unterstützung des "Antisubmarining" bereitzustellen.

Der Gasgenerator ist bevorzugt an dem Sitzrahmen, insbesondere unterhalb des Sitzrahmens montiert und befindet sich bevorzugt in unmittelbarer Nähe des flach auf der Auflage oder dem Sitzrahmen montierten Gassackes. Dadurch lassen sich eine kompakte Bauweise und ein schnelles Entfalten realisieren.

Der Gasgenerator ist an dem Sitzrahmen oder der plattenförmigen Auflage über Befestigungsbolzen, Schrauben oder dergleichen befestigt, alternativ kann der Gasgenerator auch angeschweißt sein.

Die Stützplatte ist dabei in Richtung auf den Gassack gefaltet oder umgelegt und kann an dem Sitzrahmen oder an der Auflagerplatte befestigt oder angeordnet sein. Bei einer einteiligen Ausgestaltung der Stützplatte ist es vorgesehen, dass an der Knicklinie oder Faltlinie eine filmscharnierartige Verbindung besteht. Alternativ dazu ist es möglich, dass die Stützplatte gelenkig an dem Sitzrahmen gelagert ist, beispielsweise indem Laschen in Ausnehmungen eingeführt und gegebenenfalls umgebogen werden. Alternativ kann ein separates Gelenk oder Scharnier vorhanden sein, das die Stützplatte mit dem Sitzrahmen oder der Auflagerplatte verbindet,

Der Sitzrahmen oder die Auflagerplatte kann ein Gehäuse für den Gasgenerator ausbilden, so dass der Gasgenerator lediglich in dieses Gehäuse eingeführt und über Befestigungseinrichtungen, beispielsweise Schrauben oder Befestigungsbolzen, an der Auflagerplatte oder dem Sitzrahmen befestigt sein kann. Eine bevorzugte Ausgestaltung sieht vor, dass die Auflagerplatte ein separates Bauteil ist, das zugleich ein Gehäuse für den Gasgenerator ausbildet, mit einem vorbefestigten Gassack, der beispielsweise Löcher an seinem Umfang außerhalb einer Umfangsnaht aufweist und in Haken oder dergleichen eingehakt und befestigt ist. Dadurch wäre eine modulartige Ausgestaltung der Auflagerplatte mit Gasgenerator und Gassack, gegebenenfalls mit einer ausgebildeten oder angeordneten Stützplatte möglich, wobei das Modul lediglich in den Sitzrahmen eingeschraubt oder eingehakt und der Gasgenerator mit einer entsprechenden Verkabelung verbunden werden muss, um eine funktionsfähige Sicherheitseinrichtung bereitstellen zu können.

Die Stützplatte, die als Unterstützung für die rampenartige Ausgestaltung des vorderen Bereiches des Sitzrahmens ausgebildet ist, kann elastisch in Richtungen auf den Gassack vorgespannt sein, um diesen sicher im nicht aktivierten Zustand an Ort und Stelle zu halten.

Der Gassack kann Entlüftungsöffnungen, bevorzugt in Schlitzform, aufweisen, um ein kontrolliertes Entweichen des vom Gasgenerator bereitgestellten Entfaltungsgases zu bewirken. Ebenfalls kann die Stützplatte, die im aktivierten Zustand des Gassackes an diesem anliegt, Lüftungsöffnungen aufweisen, die bevorzugt korrespondierend zu den Entlüftungsöffnungen des Gassackes angeordnet sind, damit die Stützplatte die Entlüftung des aufgeblasenen Gassackes nicht unmäßig behindert.

Der Gassack besteht dabei bevorzugt aus einem Gewebe, das ganz oder teilweise beschichtet sein kann, wodurch die Masse und das Gewicht im Vergleich zu den bekannten Entfaltungskörpern aus Metall oder Kunststoff verringert werden kann. Gleichzeitig wird die Bauhöhe im Vergleich zu den üblichen Einrichtungen reduziert.

Der Gasgenerator kann ein Druckluftbehälter oder ein pyrotechnischer Gasgenerator sein.

Nachfolgend werden Ausführungsbeispiele der Erfindung an Hand der beigefügten Figuren näher erläutert. Gleiche Bezugszeichen in den Figuren bezeichnen gleiche Bauteile. Aus Gründen der Übersichtlichkeit sind nicht in sämtlichen Figuren alle Bezugszeichen aufgeführt. Es zeigen:
- Figur 1 -: eine schematische Teilschnittansicht durch einen Fahrzeugsitz;
- Figur 2 -: eine Unteransicht des Sitzkissens gemäß der Figur 1;
- Figur 3 -: eine Detaildarstellung eines Sitzuriterteiles;
- Figur 4 -: ein Sitzunterteil gemäß Figur 3 mit entfaltetem Gassack;
- Figur 5 -: einen Zustand gemäß Figur 4 von schräg vom;
- Figur 6 -: eine Variante der Erfindung;
- Figur 7 -: einen Gassack in seiner entfalteten Stellung;
- Figur 8 -: eine perspektivische Ansicht von schräg vorn; sowie
- Figur 9 -: eine Unteransicht der Variante gemäß den Figuren 6 bis 8;
- Figur 10 -: eine erste Variante der Befestigung des Airbags;
- Figur 11 -: der Airbag gemäß Figur 10 in aufgeblasener Position;
- Figur 12 -: eine alternative Befestigung des Airbags; sowie
- Figur 13 -: der Airbag gemäß Figur 12 im aufgeblasenen Zustand.

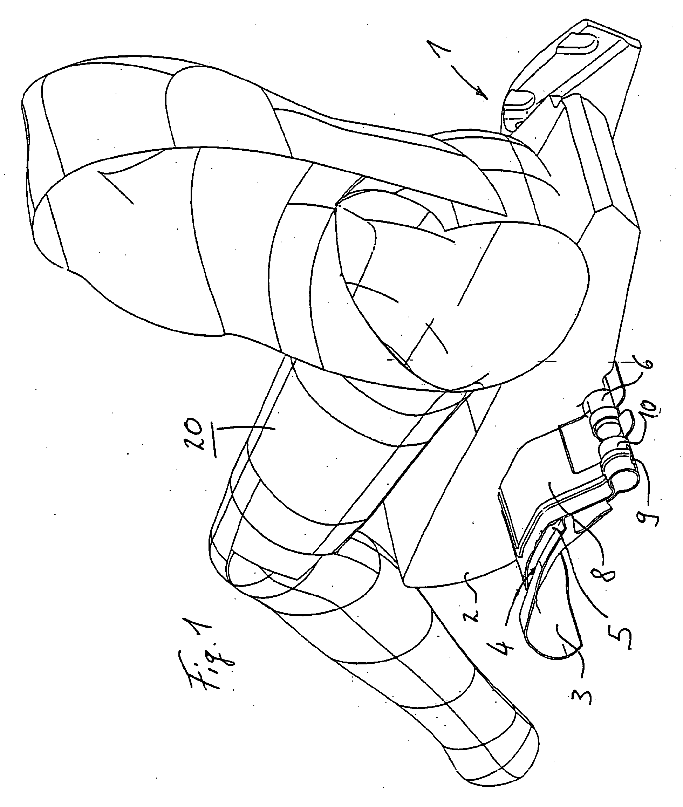

In der Figur 1 ist schematisch ein Fahrzeugsitz 1 ohne eine Rückenlehne dargestellt. Auf dem Fahrzeugsitz 1 befindet sich ein Sitznutzer 20, der ebenfalls nur teilweise schematisch dargestellt ist. Der Fahrzeugsitz 1 weist ein Sitzpolster 2 auf, das auf einem Sitzrahmen 3 befestigt ist. Der Sitzrahmen 3 bildet eine Auflagerplatte 4 aus oder nimmt eine solche Auflagerplatte 4 auf, die sich im vorderen Bericht des Fahrzeugsitzes 1 in Richtung zu dem vorderen Sitzrand ansteigend erstreckt. Auf diese Auflagerplatte 4, die sich bevorzugt quer über die gesamt Sitzbreite erstreckt, ist flach ein Gassack 5 aufgelegt, der sich im Wesentlichen über die gesamte Sitzbreite erstreckt. Der Gassack 5 kann mit einem Druck zwischen 3 und 5 bar betrieben werden und ist bevorzugt als ein einkammeriger Gassack ausgebildet. Dabei kann der Gassack 5 aus zwei Gewebezuschnitten, die über eine Umfangsnaht miteinander vernäht sind, oder als ein einstückig gewebter Gassack ausgebildet sein. Die Webart der Fasern des Gewebes des Gassackes erstreckt sich in und senkrecht zur Fahrtrichtung und kreuzt sich bevorzugt in einem rechten Winkel.

Das Gewebe ist teilweise oder vollständig beschichtet, um gegenüber einem heißen Gas, das aus einem Gasgenerator 6 im Falle eines Unfalles in den Gassack 5 eingeleitet wird, widerstandsfähig zu sein. Darüber hinaus kann die Beschichtung einen zusätzlichen Abdichteffekt erzielen.

Über den flachen Gassack 5 ist eine Stützplatte 8 ausgebildet und angeordnet, die im Wesentlichen der aufsteigenden Kontur der Auflagerplatte 4 entspricht. Die Stützplatte 8 ist über ein Gelenk 9, beispielsweise eine Art Filmscharnier oder ein anderes Gelenk, mit dem Sitzrahmen 3 oder mit der Auflagerplatte 4 verbunden. Sowohl die Auflagerplatte 4 als auch die Stützplatte 8 bilden ein Gehäuse 10 zur Aufnahme des Gasgenerators 6 aus. Alternativ kann die Stützplatte 8 eingehakt, aufgelegt oder umgebogen sein.

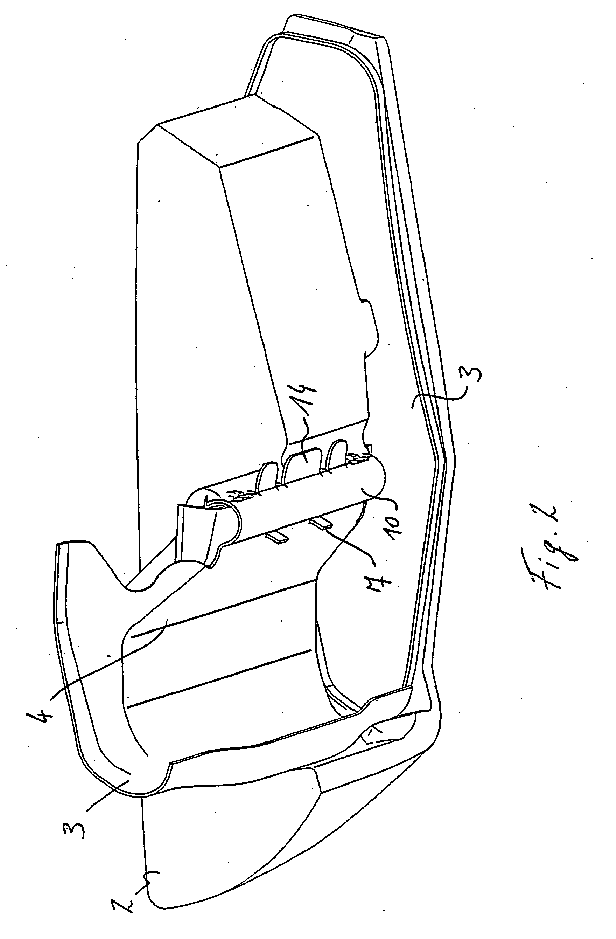

Die Figur 2 zeigt in Unteransicht das Sitzkissen des Sitzes 1 gemäß der Figur 1. Der Sitzrahmen 3 mit der schräg nach oben gerichteten Auflagerplatte 4 und dem darüber angeordneten Sitzpolster ist ebenso zu erkennen wie das Gehäuse 10, das als Teil der Auflagerplatte 4 bzw. des Sitzrahmens 3 ausgebildet ist. Montageflansche 14 dienen zur Befestigung des Gasgenerators bzw. des Sitzpolsters.

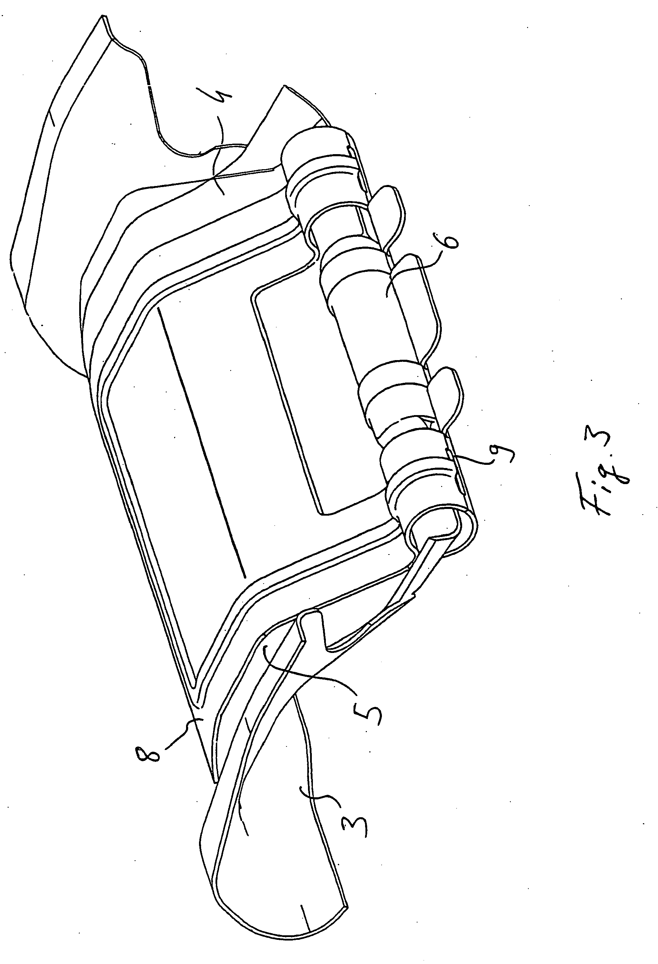

In der Figur 3 ist eine Detaildarstellung des Sitzunterbaues mit dem Sitzrahmen 3, dem flach auf der Auflagerplatte 4 angeordneten Gassack 5 und der darüber gelegten Stützplatte zu erkennen. Der Gassack 5 ist an dem Gasgenerator 6 befestigt und wird von diesem auch im Falle eines Aufblasens an dem Sitzrahmen 3 bzw. an der Auflagerplatte 4 gehalten. Wie in der Figur 2 zu erkennen ist, ist der Gasgenerator über Befestigungslaschen 7 an dem Sitzrahmen 3 bzw. der einstückig damit ausgebildeten Auflagerplatte 4 befestigt.

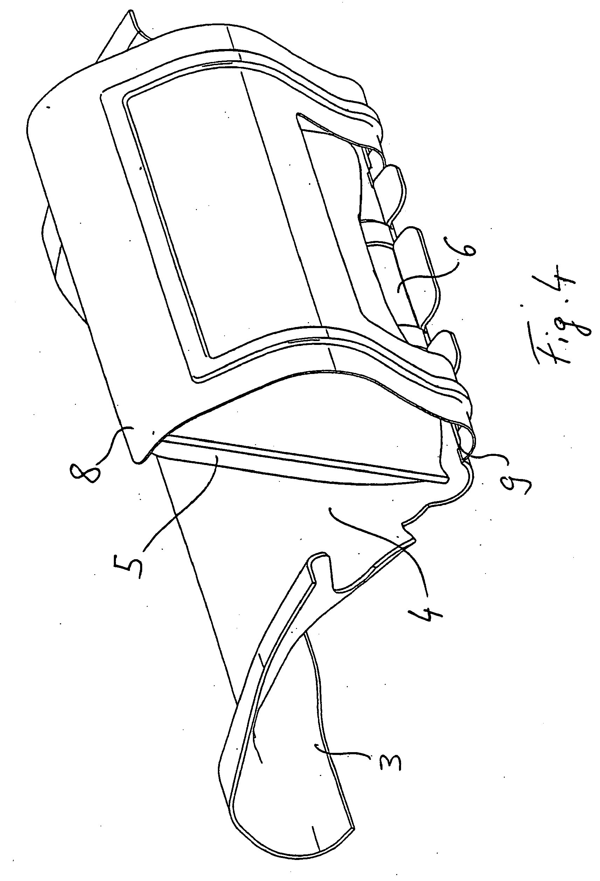

In der Figur 4 ist das Sitzunterteil gemäß Figur 3 in dem entfalteten Zustand des Gassackes 5 gezeigt. Nach einem Unfall wurde über eine Steuereinrichtung ein Sensorsignal an den Gasgenerator weitergeleitet, der dann entweder das gespeicherte Druckmedium oder den pyrotechnischen Treibsatz aktivierte. Dadurch wurde der Gassack 5 aufgeblasen und die Stützplatte 8 aufgerichtet und nach oben verlagert. Ein sich nach vorne bewegendes Becken des Sitznutzers würde in diesem Zustand gegen die Stützplatte 8 gedrückt werden. Ein Nachvornerutschen des Beckens wurde dadurch effektiv verhindert, ebenso wie ein Unterdurchtauchen des Beckens unter einem nicht dargestellten Beckengurt.

Neben der Rückhaltewirkung der aufgerichteten Stützplatte 8 und der Anhebung des darüber befindlichen Sitzpolsters 2 verhindert die Stützplatte 8 auch bei einem nicht aktivierten Gassack 5 das "Submarining" durch die nach vorne ansteigende Konturierung. Dies gilt auch für einen Sitz mit einem nicht montierten Airbag. Die Stützplatte 8 ist gelenkig über das Gelenk 9 mit Auflagerplatte 4 verbunden und unterstützt und hält den Gassack 5 nach der Aktivierung in dem gewünschten Zustand. Darüber hinaus bildet die Stützplatte 8 ein Teil des Gehäuses, ebenso wie die Auflagerplatte 4.

Nicht dargestellt Öffnungen können korrespondierend zur Entlüftungsöffnungen in dem Gassack vorhanden sein, um einen Gasauslass zu ermöglichen.

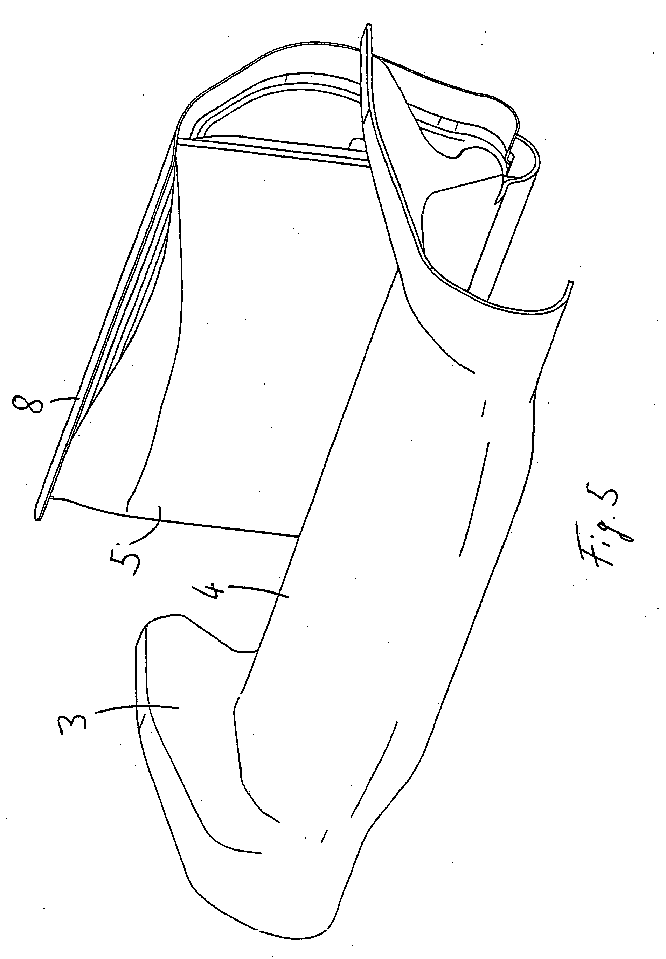

Figur 5 zeigt den Zustand gemäß Figur 4 aus einer anderen Ansicht, nämlich von schräg vorn. Im nicht aktivierten Zustand kann der Gassack 5 auf der Auflagerplatte 4 festgelegt sein, beispielsweise durch Einhaken von Laschen oder Knöpfen. Die Auflagerplatte 4 stützt den Gassack 5 nach unten ab und stellt gleichzeitig die Rampenfunktion gegen das "Submarining" im nicht aktivierten Zustand des Gassackes 5 bereit.

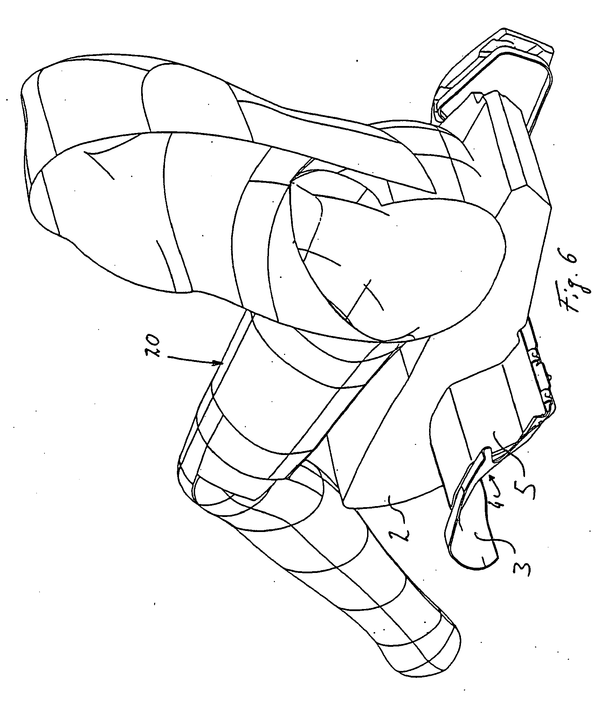

In der Figur 6 ist eine Variante der Erfindung gezeigt, bei der der Gassack 5 flach auf der Auflagerplatte 4 aufliegt, wobei keine Stützplatte 8 den Gassack 5 abdeckt. Die Auflagerplatte 4 bildet das Gehäuse für den nicht dargestellten Gasgenerator aus.

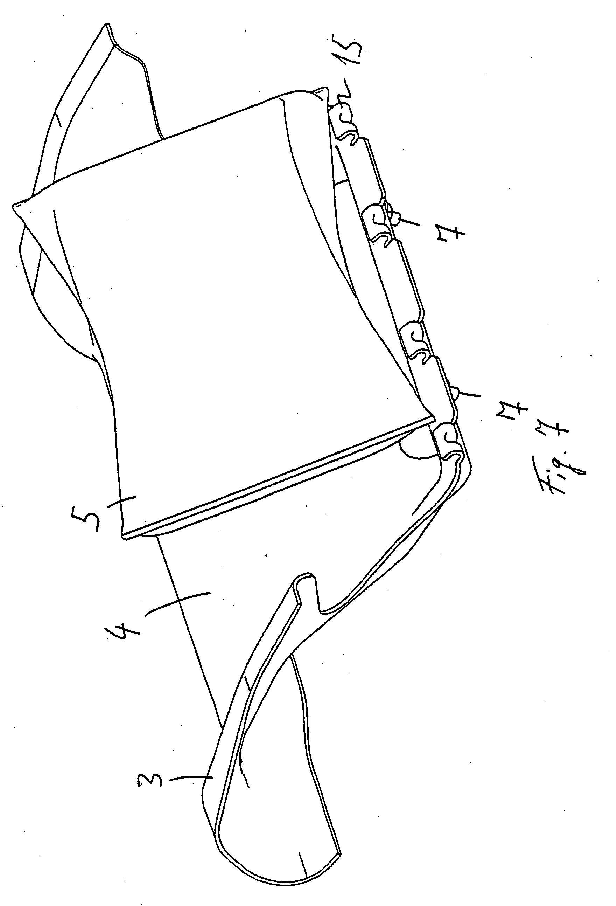

In der Figur 7 ist der Gassack 5 in seiner entfalteten Stellung gezeigt. Über umgebogene Laschen 15 wird der Gassack an der Auflagerplatte 4 und dem Sitzrahmen 3 gehalten. Befestigungsstutzen 7 ragen durch die Auflagerplatte 4 hindurch, mit denen der Gasgenerator festgelegt werden kann.

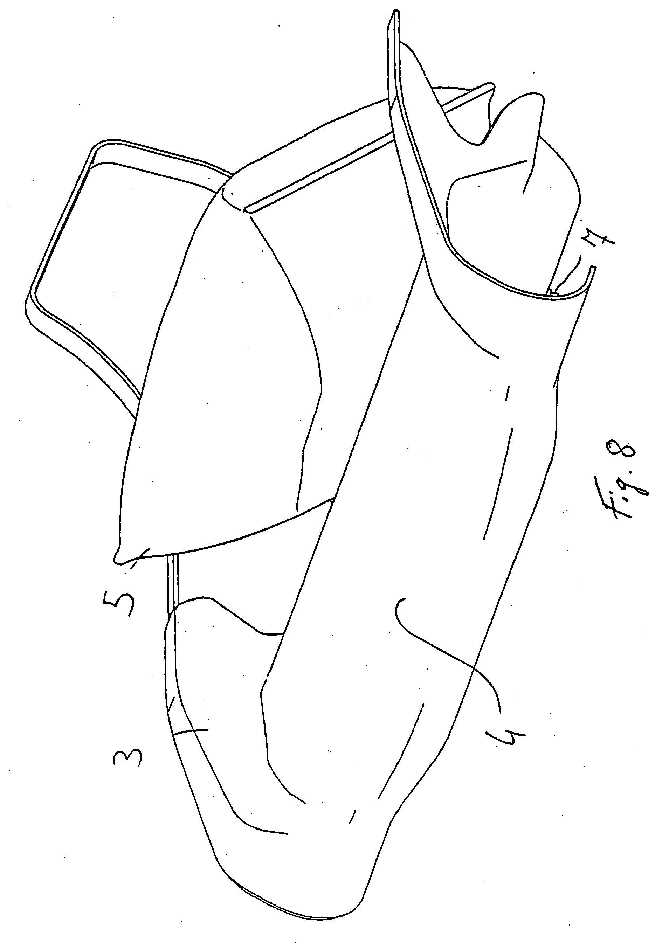

Eine perspektivische Ansicht von schräg vorn ist in der Figur 8 gezeigt, ebenfalls ohne Sitzpolster und Stützplatte 8.

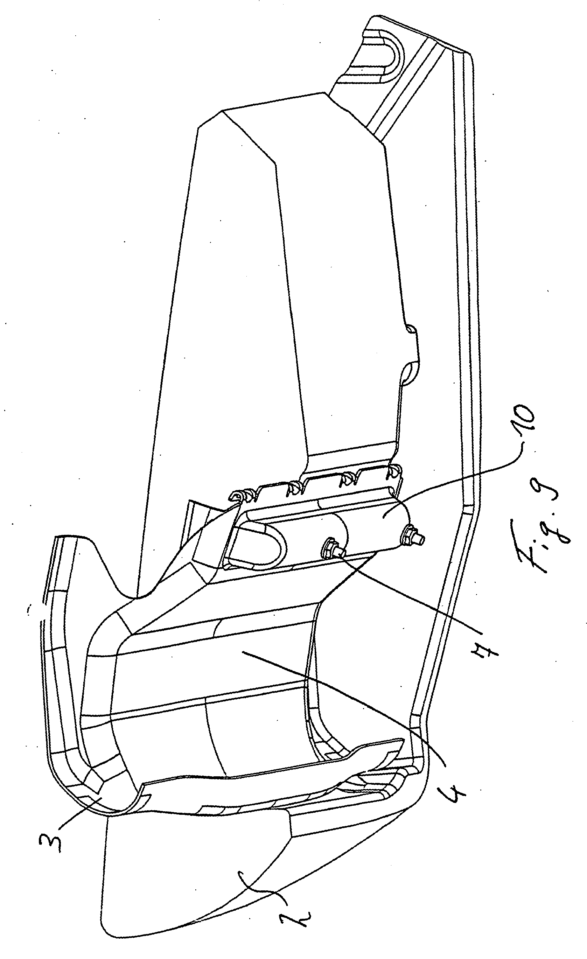

Die Figur 9 zeigt eine Unteransicht der Variante gemäß der Figuren 6 bis 8. Das ausgeformte Gehäuse 10 ist in dieser Ansicht ebenso zu kennen wie die Schraubbefestigung über Befestigungsstutzen 7, die nach oben in Richtung der Vorderkante geneigte Anordnung der Auflagerplatte 4 und das über dem flachen Gassack ausgebildete Sitzpolster 2.

Der Gasgenerator 6 und das Gehäuse 10 sind bevorzugt an dem hinteren Ende des Gassackes 5 angeordnet, da dort die größte Polsterdicke vorhanden ist. Der Gasgenerator 6 kann direkt an der Auflagerplatte 4 mit oder ohne eine Nahtverstärkung des Gassackes 5 montiert sein.

Durch die Anordnung des Gasgenerators 6 an dem rückwärtigen Ende des Gassackes wird ein Aufrollen des Gassackes 5 in Richtung auf das Sitzvorderende vermieden. Das Becken des Sitznutzers wird nicht unmittelbar durch den Gasgenerator 6 kontaktiert, sodass Schädigungen des Beckens durch einen unmittelbaren Kontakt mit dem Gasgenerator 6 nicht zu erwarten sind. Darüber hinaus wird der Gassack 5 an der richtigen Stelle, nämlich möglichst nahe an dem Becken zuerst aufgeblasen.

Der Gasgenerator ist bevorzugt vor dem Zunähen in dem Gassack 5 angeordnet, um einen aufwendigen Anschluss durch besondere Befestigungsmittel oder ein separates Umnähen zu vermeiden. Darüber hinaus wird die Stabilität des Gassackes erhöht, wenn sich der komplette Gasgenerator innerhalb des Gassackes befindet. Die Befestigungsbolzen 7 ragen durch das Gewebe des Gassackes 5 hindurch. Die Steuerleitung zum Auslösen des Gasgenerators 6 kann durch eine Entlüftungsöffnung in dem Gassack 5 hindurchgeführt sein.

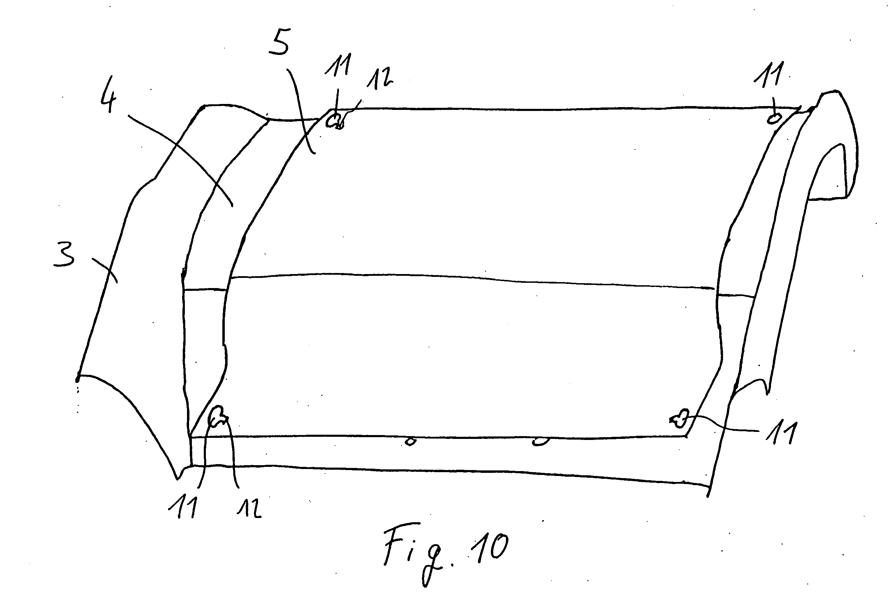

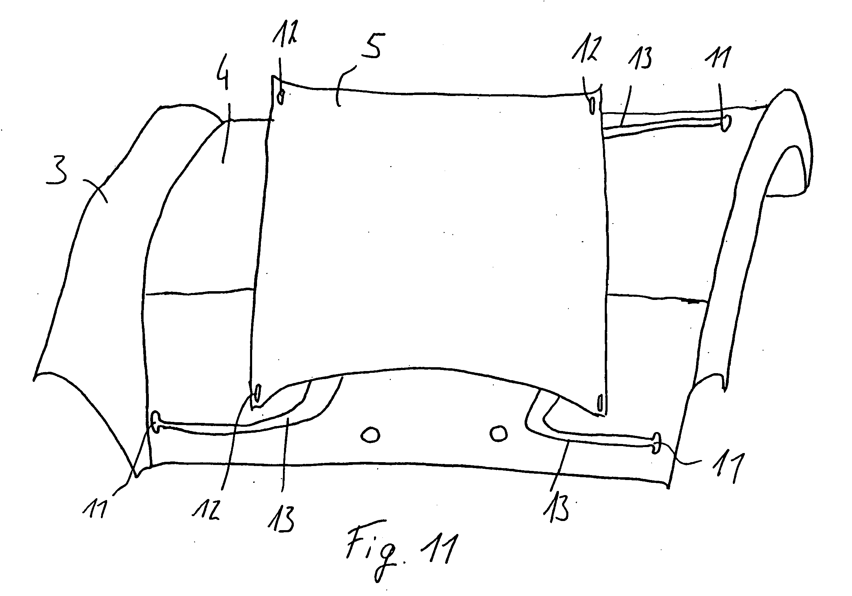

In der Figur 10 ist ausschnittsweise der Fahrzeugsitz mit dem Sitzrahmen 3 und der Auflagerplatte 4 dargestellt, auf der ein Gassack 5 befestigt ist. Um zu verhindern, dass der Gassack 5 in der nicht aufgeblasenen Stellung verlagert wird, ist es notwendig, Befestigungsmittel vorzusehen, die den Gassack 5 auf der Auflagerplatte 4 fixieren. Diese Befestigungsmittel müssen zusätzlich zur Befestigung erfolgen, die über den nicht dargestellten Gasgenerator bereitgestellt wird. Um ein möglichst flaches und sicheres Aufliegen des Gassackes 5 auf dem Sitzrahmen 3, insbesondere auf der Auflagerplatte 4 ungefaltet und in einer Ebene liegend, sicherzustellen, sind in der ersten Ausgestaltung der Erfindung an den vier Ecken des Gassackes 5 Befestigungselemente 11 in Gestalt von Haken oder Verbreiterungen an Laschen oder Bändern vorgesehen, die in Öffnungen 12. die am besten in der Figur 11 zu erkennen sind, eingreifen. Die Öffnungen 12 sind an den Ecken des Gassackes ausgebildet und ermöglichen, dass die Befestigungsmittel 11, beispielsweise Haken oder dergleichen, in die Öffnungen oder Ausnehmungen 12 eingeführt werden können. Der Teil des Gassackes 5, in dem die Öffnungen 12 ausgebildet sind, sind nicht in dem Bereich ausgebildet, der von dem Gasgenerator 6 mit Gas befüllt wird. Sollten diese Öffnungen 12 als Entlastungs- oder Entlüftungsöffnungen genutzt werden, müssten entsprechende Verbindungsöffnungen zur strömungstechnischen Verbindung mit dem inneren Volumen des Gassackes 5 bereitgestellt werden. Der Gassack 5 liegt flach und ungefaltet auf der Auflagerplatte 4 auf.

Wird der Gassack 5 befüllt und entfaltet sich dieser, wie es in der Figur 11 dargestellt ist, werden die Befestigungselemente 11 oder Formschlusselemente gelöst, vorliegend indem sie aus den Öffnungen 12 herausgezogen oder ausgehakt werden. Die Formschlusselemente 11 oder Haken sind Teile eines dünnen Halteelementes 13, vorliegend aus Kunststoff, das flach auf der Oberfläche der Auflagerplatte 4 aufliegt und dort fixiert ist, beispielsweise über einen Kleber. Die Form und die Größe des Halteelementes 13 kann auch anders ausgestaltet sein, ebenfalls kann es an der Abstützplatte 4 oder dem Sitzrahmen 3 auf andere Art und Weise befestigt werden, beispielsweise über Nieten, Formschlusselemente oder Schrauben. Während durch die Befestigungselemente 11 die ebene Gestalt des unaufgeblasenen Gassackes 5 sichergestellt wird, beinträchtigen diese nicht oder nur unerheblich die Entfaltung des Gassackes 5, so dass die gewünschte Funktion des Antisubmarining gewährleistet ist.

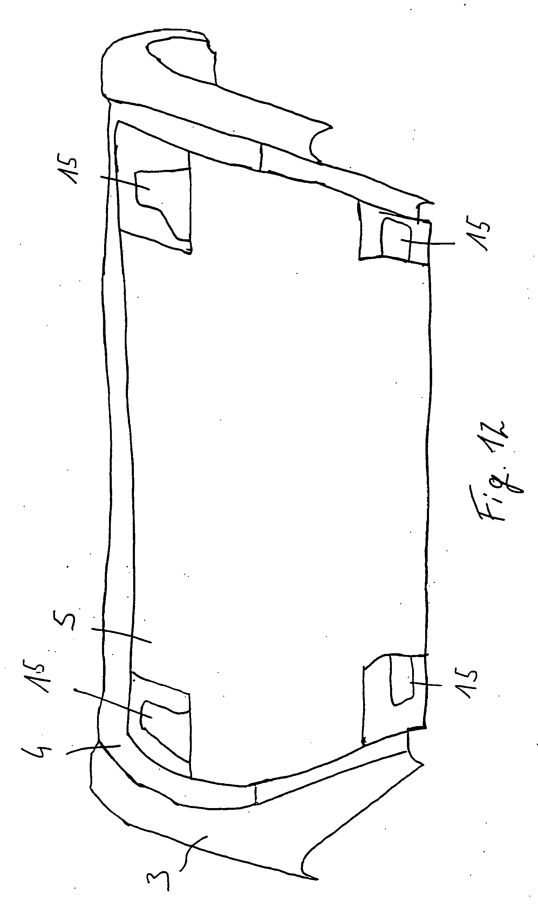

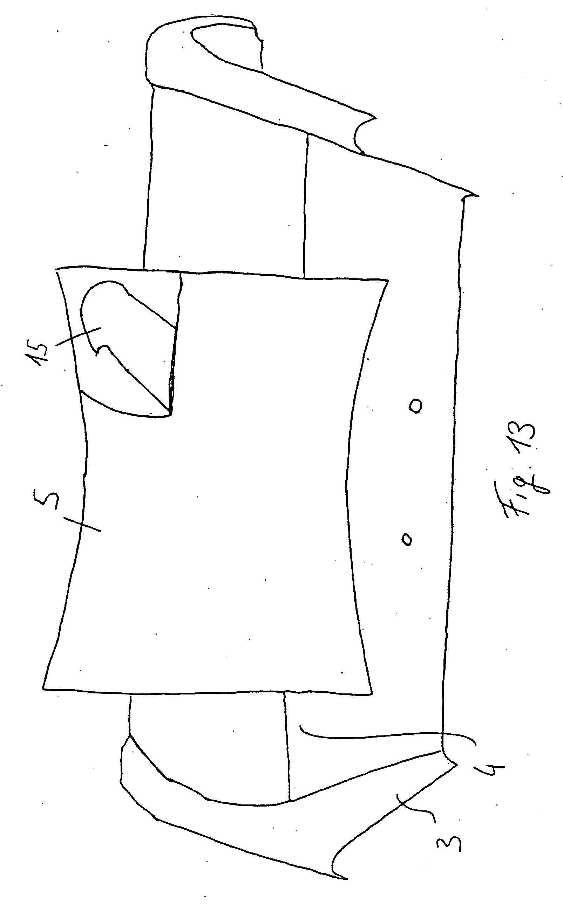

In der Figur 12 ist eine Variante der Befestigung des nicht aufgeblasenen Gassackes 5 auf der Auflagerplatte 4 gezeigt. Die Befestigung erfolgt dabei über innerhalb des Gassackes 5 angeordnete steife, jedoch elastische Kunststoff- oder Metallzungen 15, die in dem teilweise freigeschnittenen Gassack 5 dargestellt sind. Die Zungen oder Laschen 15 können miteinander verbunden sein und erstrecken sich in Richtung der Ecken des Gassackes 5. Sofern die Zungen 15 zu einem Bauteil zusanimengefasst sind, kann dieses an dem Gasgenerator oder an der Auflagerplatte 4 befestigt werden und hält aufgrund der Vorspannung, ähnlich einer Knickfeder oder Totpunktfeder, die Ecken des Gassackes 5 fest auf der Auflagerplatte 4. Sobald über den Gasgenerator Gas in den Gassack 5 eingeleitet wird, zieht sich dieser zusammen und biegt die Fixierelemente oder Zungen 15 nach oben, was in der Figur 13 in der teilweise in Schnittdarstellung gezeigten rechten oberen Ecke dargestellt ist. Aufgrund der flexiblen Ausgestaltung der Zungen 15 biegen diese sich nach oben und ermöglichen ein Aufblasen und Vergrößern des Gassackvolumens, um die Stützplatte oder das Sitzpolster anzuheben bzw. zu versteifen.

Grundsätzlich sind auch andere Befestigungsmöglichkeiten vorgesehen, um den Gassack 5 auf der Auflagerplatte 4 oder an dem Sitzrahmen 3 festzulegen, damit dieser im nicht entfalteten Zustand fixiert bleibt. Dabei können Klebepunkte, Clipsverbindungen oder andere formschlüssige oder elastische Halterungen vorgesehen sein.

### Bezugszeichenliste

- 1: Sitz
- 2: Sitzpolster
- 3: Sitzrahmen
- 4: Auflagerplatte
- 5: Gassack
- 6: Gasgenerator
- 7: Befestigungsbolzen
- 8: Stützplatte
- 9: Gelenk
- 10: Gehäuse für Gasgenerator
- 11: Befestigungselement
- 12: Öffnung
- 13: Halteelement
- 14: Montageflansch
- 15: Fixierelement/Zunge

## Patentansprüche

1. Sicherheitseinrichtung in einem Fahrzugsitz mit einem Sitzrahmen (3) auf dem ein Sitzpolster (2) angebracht ist, und einer Airbageinheit mit einem Gasgenerator(6) und einem Gassack (5), die unterhalb des Sitzpolsters (2) an dem Sitzrahmen (3) angeordnet ist, wobei der Gassack (5) im nicht aktivierten Zustand ungefaltet flach auf dem Sitzrahmen (3) und einer daran befestigten Auflagen (4) aufliegt und eine Stützplatte (8) zumindest einen Teil des Gassackes (5) im nicht aktivierten Zustand gegenüber dem Sitzpolster (2) abdeckt, **dadurch gekennzeichnet, dass** die Stützplatte (8) Teil des Sitzrahmens (3) oder der Auflage (4) ist und mit einer Feder, insbesondere einer Torsionsfeder, in Richtung auf den Gassack (5) vorgespannt ist.

2. Sicherheitseinrichtung nach Anspruch 1, **dadurch gekennzeichnet, dass** die Auflage (4) plattenförmig ausgebildet ist und der Gassack (5) auf ihr aufliegt.

3. Sicherheitseinrichtung nach Anspruch 1 oder 2, **dadurch gekennzeichnet, dass** der Gasgenerator (6) an dem Sitzrahmen (3), insbesondere unterhalb des Sitzrahmens (3), oder der Auflage (4) montiert ist.

4. Sicherheitseinrichtung nach einem der voranstehenden Ansprüche, **dadurch gekennzeichnet, dass** der Gasgenerator (6) an dem Sitzrahmen (3) oder der Auflage (4) über Befestigungsbolzen (7) festgeschraubt ist.

5. Sicherheitseinrichtung nach Anspruch 1, **dadurch gekennzeichnet, dass** die Stützpatte (8) in Richtung auf den Gassack (5) gefaltet ist.

6. Sicherheitseinrichtung nach Anspruch 1, **dadurch gekennzeichnet, dass** die Stützplatte (8) gelenkig an dem Sitzrahmen (3) gelagert ist.

7. Sicherheitseinrichtung nach einem der voranstehenden Ansprüche, **dadurch gekennzeichnet, dass** der Sitzrahmen (3) oder die Auflage (4) ein Gehäuse (10) für den Gasgenerator (6) ausbildet.

8. Sicherheitseinrichtung nach einem der voranstehenden Ansprüche, **dadurch gekennzeichnet, dass** die Stützplatte (8) elastisch in Richtung auf den Gassack (5) vorgespannt ist.

9. Sicherheitseinrichtung nach einem der voranstehenden Ansprüche, **dadurch gekennzeichnet, dass** der Gassack (5) Entlüftungsöffnungen aufweist.

10. Sicherheitseinrichtung nach einem der voranstehenden Ansprüche, **dadurch gekennzeichnet, dass** die Stützplatte (8) Lüftungsöffnungen aufweist.

11. Sicherheitseinrichtung nach den Ansprüchen 9 mit 10 **dadurch gekennzeichnet, dass** die Entlüftungsöffnungen im Gassack (5) und die Lüftungsöffnungen der Stützplatte (8) korrespondierend zueinander angeordnet sind.

12. Sicherheitseinrichtung nach einem der voranstehenden Ansprüche, **dadurch gekennzeichnet, dass** der Gassack (5) aus einem Gewebe hergestellt ist.

## Claims

1. Safety device in a vehicle seat with a seat frame (3), on which a seat cushion (2) is fitted, and an airbag unit with a gas generator (6) and an airbag (5), which airbag unit is arranged below the seat cushion (2) on the seat frame (3), wherein the airbag (5), when not activated, rests in an unfolded, flat manner on the seat frame (3) or a support (4) fastened thereto and a supporting panel (8) covers at least part of the airbag (5), when it is not activated, with respect to the seat cushion (2), **characterized in that** the supporting panel (8) is part of the seat frame (3) or of the support (4) and is prestressed with a spring, in particular a torsion spring, in the direction of the airbag (5).

2. Safety device according to Claim 1, **characterized in that** the support (4) is in the form of a panel and the airbag (5) rests on it.

3. Safety device according to Claim 1 or 2, **characterized in that** the gas generator (6) is fitted to the seat frame (3), in particular below the seat frame (3), or to the support (4).

4. Safety device according to one of the preceding claims, **characterized in that** the gas generator (6) is screwed down on the seat frame (3) or the support (4) via fastening bolts (7).

5. Safety device according to Claim 1, **characterized in that** the supporting panel (8) is folded in the direction of the airbag (5).

6. Safety device according to Claim 1, **characterized in that** the supporting panel (8) is mounted in an articulated manner on the seat frame (3).

7. Safety device according to one of the preceding claims, **characterized in that** the seat frame (3) or the support (4) forms a housing (10) for the gas generator (6) .

8. Safety device according to one of the preceding claims, **characterized in that** the supporting panel (8) is prestressed elastically in the direction of the airbag (5).

9. Safety device according to one of the preceding claims, **characterized in that** the airbag (5) has vent openings.

10. Safety device according to one of the preceding claims, **characterized in that** the supporting panel (8) has ventilation openings.

11. Safety device according to claim 9 with 10, **characterized in that** the vent openings in the airbag (5) and the supporting panel (8) are arranged corresponding with one another.

12. Safety device according to one of the preceding claims, **characterized in that** the airbag (5) is produced from a fabric.

## Revendications

1. Dispositif de sécurité dans une assise de véhicule comprenant un châssis d'assise (3) sur lequel est placé un rembourrage d'assise (2), et une unité de coussin gonflable ayant un générateur de gaz (6) et un sac de gaz (5) qui est agencée sur le châssis d'assise (3) sous le rembourrage d'assise (2), le sac de gaz (5) reposant, à l'état non activé, déplié à plat sur le châssis d'assise (3) et sur un support (4) y étant fixé, et à l'état non activé, une plaque de soutien (8) recouvrant au moins une partie du sac de gaz (5) vis-à-vis du rembourrage d'assise (2), **caractérisé en ce que** la plaque de soutien (8) fait partie du châssis d'assise (3) ou du support (4) et est précontrainte en direction du sac de gaz (5) à l'aide d'un ressort, en particulier un ressort de torsion.

2. Dispositif de sécurité selon la revendication 1, **caractérisé en ce que** le support (4) est en forme de plaque et le sac de gaz (5) repose sur lui.

3. Dispositif de sécurité selon la revendication 1 ou 2, **caractérisé en ce que** le générateur de gaz (6) est monté sur le châssis d'assise (3), en particulier en-dessous du châssis d'assise (4), ou sur le support (4).

4. Dispositif de sécurité selon l'une quelconque des revendications précédentes, **caractérisé en ce que** le générateur de gaz (6) est vissé au châssis d'assise (3) ou au support (4) par l'intermédiaire de boulons de fixation (7).

5. Dispositif de sécurité selon la revendication 1, **caractérisé en ce que** la plaque de soutien (8) est pliée vers le sac de gaz (5).

6. Dispositif de sécurité selon la revendication 1, **caractérisé en ce que** la plaque de soutien (8) est montée de façon articulée au châssis d'assise (3).

7. Dispositif de sécurité selon l'une quelconque des revendications précédentes, **caractérisé en ce que** le châssis d'assise (3) ou le support (4) forme un boîtier (10) pour le générateur de gaz (6).

8. Dispositif de sécurité selon l'une quelconque des revendications précédentes, **caractérisé en ce que** la plaque de soutien (8) est précontrainte de façon élastique en direction du sac de gaz (5).

9. Dispositif de sécurité selon l'une quelconque des revendications précédentes, **caractérisé en ce que** le sac de gaz (5) présente des ouvertures de sortie d'air.

10. Dispositif de sécurité selon l'une quelconque des revendications précédentes, **caractérisé en ce que** la plaque de soutien (8) présente des ouvertures d'aération.

11. Dispositif de sécurité selon les revendications 9 avec 10, **caractérisé en ce que** les ouvertures de sortie d'air dans le sac de gaz (5) et les ouvertures d'aération de la plaque de soutien (8) sont agencées en correspondance mutuelle.

12. Dispositif de sécurité selon l'une quelconque des revendications précédentes, **caractérisé en ce que** le sac de gaz (5) est fabriqué en tissu.
